# EUROPEAN PATENT APPLICATION

(11) **EP 2 055 817 A1**
(43) Date of publication of application: **06.05.2009**
(21) Application number: 08167630.6
(22) Date of filing: 27.10.2008
(51) Int. Cl.: D02G 3/48, B60C 9/00

(54) **Tire comprising a high extensible cut-resistant barrier and fabric therefor**

(30) Priority: 31.10.2007 US 931973
(71) Applicant: The Goodyear Tire & Rubber Company, Akron, OH 44316-0001 (US)
(72) Inventor: Westgate, Walter Kevin, Uniontown, OH 44685 (US); Tweedie, Judith Anne, Uniontown, OH 44685 (US); Brainerd, II, John Fleming, Medina, OH 44256 (US)
(74) Representative: Kutsch, Bernd

(57) **Abstract**

The invention relates to a tire comprising at least one cord, the cord comprising at least two different fibers of the group comprising aramid fibers, polyamide fibers, liquid crystalline aromatic polyesters, carbon fibers, fiberglass, and metallic fibers. In one aspect, the tire comprises a ply (20) comprising a fabric which comprises an aramid/polyamide 6,6 merged cord (16) and wherein the fabric is at an angle of between 0° and 180° to the ply angle. The invention further relates to an unidirectional fabric for use in an associated vehicle tire, the fabric comprising an aramid/polyamide 6,6 merged cord (16) or core insertion cord (36).

## Description

### Background of the Invention

This invention relates to a tire and a fabric for use in a tire, and more particularly to high extensible cut-resistant barriers for tires.

### Description of the Related Art

It is known in the art to provide tires with resistance to damage by road debris. This can be accomplished in many different ways. However, current tire sidewall reinforcement configurations provide a low level of cut resistance for tires. Accordingly, there is a need has evolved to significantly improve the cut resistance of tires, as well as provide overall climbing ability while minimizing any appreciable structural damage.

### Summary of the Invention

The invention relates to a tire according to claim 1 and a fabric according to claims 12 or 13.

Dependent claims refer to preferred embodiments of the invention.

According to one embodiment of this invention, a unidirectional fabric for use in an associated vehicle tire includes an aramid/polyamide 6,6 merge cord, wherein the fabric is at an angle to a ply angle (other than 0°) in the associated tire.

According to another embodiment of this invention, a tire includes a carcass, a crown portion, shoulders, sidewalls, a bead region, two beads, the beads being within the bead region, and at least one cord, the cord being at least two of the group comprising aramid fibers, polyamide fibers, liquid crystalline aromatic polyesters, carbon fibers, fiberglass, and metallic fibers.

According to another embodiment of this invention, the cord is chosen from the group comprising a merge cord, a hybrid, and a core insertion.

According to another embodiment of this invention, the cord is chosen from the group comprising unidirectional, bidirectional, multidirectional, film, weave, and knit.

According to another embodiment of this invention, the cord is aramid fibers and polyamide fibers.

According to another embodiment of this invention, the cord has a cord density of from 5 to 40 epi, and/or a twist multiplier of from 0 to 10 and/or a cord mass of from 440 dtex to 10000 dtex.

According to another embodiment of this invention, the cord is at an angle with respect to the ply angle in the tire, wherein the cord is at an angle of from 135° to 45°, alternatively from 55° to 45°.

According to another embodiment of this invention, the tire is chosen from the group comprising bias, radial, OTR (off the road), aircraft, racing, farm, ATV (all terrain vehicle), MT (medium truck), LT (light truck), and passenger.

One advantage of this invention is improved sidewall cut resistance for tires.

Another advantage of this invention is improved overall climbing ability while minimizing any appreciable structural damage.

### Brief Description of the Drawings

The invention may take physical form in certain parts and arrangement of parts, embodiments of which will be described in detail in this specification and illustrated in the accompanying drawings which form a part hereof and wherein:
FIGURE 1 is a cutaway view of a tire;
FIGURE 2 is a graph showing the improvement in sidewall impact of the present invention;
FIGURE 3 is a another graph showing height at which puncture occurred at 35 psi (pounds per square inch) corresponding to 241317 Pa;
FIGURE 4 is another graph showing height at which puncture occurred at 15 psi corresponding to 103421 Pa;
FIGURE 5 is another graph showing average puncture height at 35 psi and 15 psi;
FIGURE 6 is a perspective view of a merge cord; and,
FIGURE 7 is a perspective view of a core insertion.

### Definitions

"Axial" and "axially" are used herein to refer to lines or directions that are parallel to the axis of rotation of the tire.

"Cord" means one of the reinforcement strands which the ply of a tire comprises.

"Cord angle" means the acute angle, left or right in a plan view of the tire, formed by a cord with respect to the equatorial plane of the tire. The "cord angle" is measured in a cured but uninflated tire.

"dtex" means decitex, which is 1 gram per 10000 meters.

"EPI" means ends per inch.

"Equatorial plane (EP)" means the plane perpendicular to the tire's axis of rotation and passing through the center of its tread.

"Fabric" means a network of extending cords, which may be twisted, and which in turn are composed of a plurality of a multiplicity of filaments (which may also be twisted) of a high modulus material.

"Fiber" is a unit of matter, either natural or man-made that forms the basic element of filaments. It is characterized by having a length at least 100 times its diameter or width.

"Floater" is defined as a ply component that is not wrapped around the bead of a tire.

"Merge" or "merged" refers to a physical combination of two or more dissimilar fiber bundles or fibers.

"Ply" means a continuous layer of rubber-coated parallel cords in the context of a tire and also means a twisted yarn in a context of a yarn or a cord as used herein the meaning is dependant on the context.

"Radial" and "radially" are used to mean directions radially toward or away from the axis of rotation of the tire.

"Twisted" means the number of turns about its axis per unit of length of a yarn, turns per inch being TPI.

"Twist multiplier" is a unit which helps to decide the twist per unit length for different counts from the same material. This is the angle of inclination of the helical disposition of the fiber in the material.

"Yarn" occurs in the following forms: 1) a number of fibers twisted together; 2) a number of filaments laid together without twist; 3) a number of filaments laid together with a degree of twist: 4) a single filament with or without twist (monofilament); 5) a narrow strip of material with or without twist.

### Detailed Description of the Invention

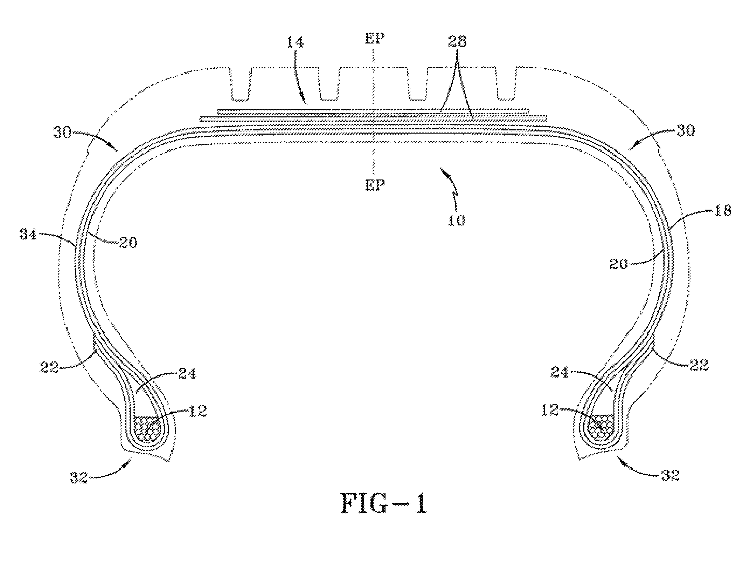

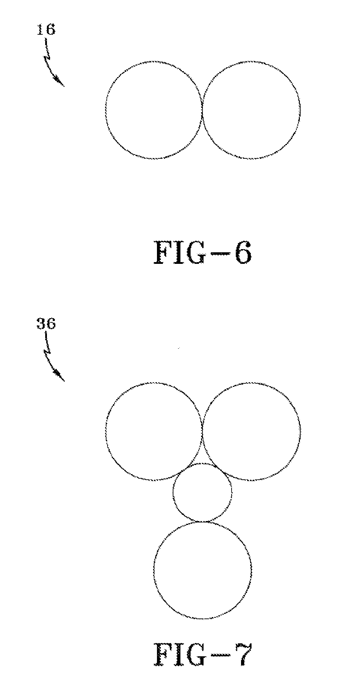

Referring now to the drawings wherein the showings are for purposes of illustrating embodiments of the invention. FIGURE 1 shows a tire with a carcass 10, beads 12, crown 14, first ply 20, right second ply 18, left second ply 34, shoulders 30, bead region 32, turn-up ends 22, bead core 24, and belts 28. FIGURES 6 and 7 show a merged cord 16 and a core insertion cord 36.

With continuing reference to FIGURES 1, 6, and 7 the present invention incorporates a fabric cord in a load bearing ply, or non-load bearing ply, which may or may not replace an existing ply. In one embodiment, the cord is a aramid/polyamide 6,6 merged cord 16. The merged cord 16 can also be referred to as a hybrid cord, wherein every other lobe is a different material. Therefore, in one embodiment of the invention, the merged cord 16 alternates aramid and polyamide 6,6. In one embodiment of the invention, the cord 16 is between a 45° and a 55° angle to the ply angle in the tire. In one embodiment of this invention, the cord 16 forms a unidirectional fabric. In another embodiment, the cord is between a 45° and a 135° angle to the ply angle in the tire. It is to be understood, however, that the angle can be between 0° and 180°.

Still referring to FIGURES 1, 6, and 7, the present invention can also be a core insertion 36, as shown in FIGURE 7. In this embodiment, the center of the core insertion 36 is a different material than the outer portion. In one embodiment of the invention, the core insertion 36 is between a 45° and a 55° angle to the ply angle in the tire. In one embodiment of this invention, the core insertion 36 forms a unidirectional fabric. In another embodiment, the cord is between a 45° and a 135° angle to the ply angle in the tire. It is to be understood, however, that the angle can be between 0° and 180°. Although in the preceding two paragraphs the invention has been described as unidirectional, it is to be understood that any of the following configurations would also work: bidirectional, multidirectional, weave, film, and knit. In another embodiment, the cord can be a hybrid cord, which is similar to the core insertion 36 shown in FIGURE 7, except that the hybrid has spaces between the fibers.

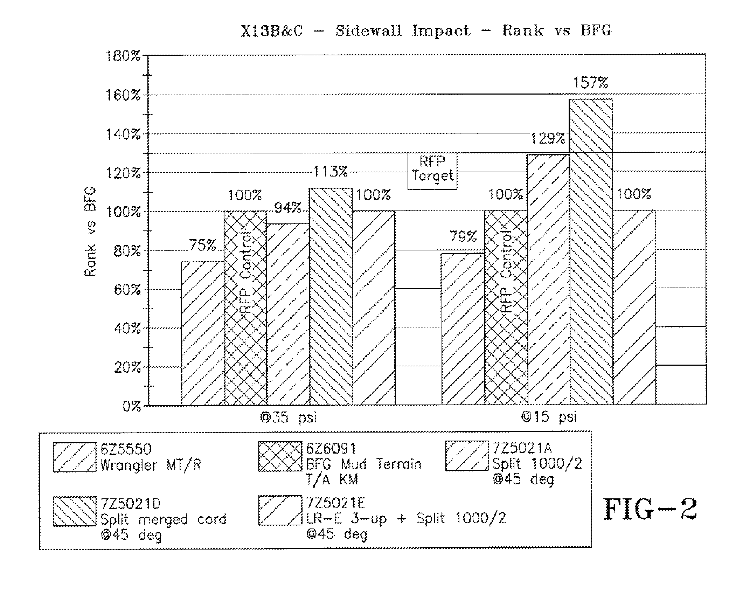

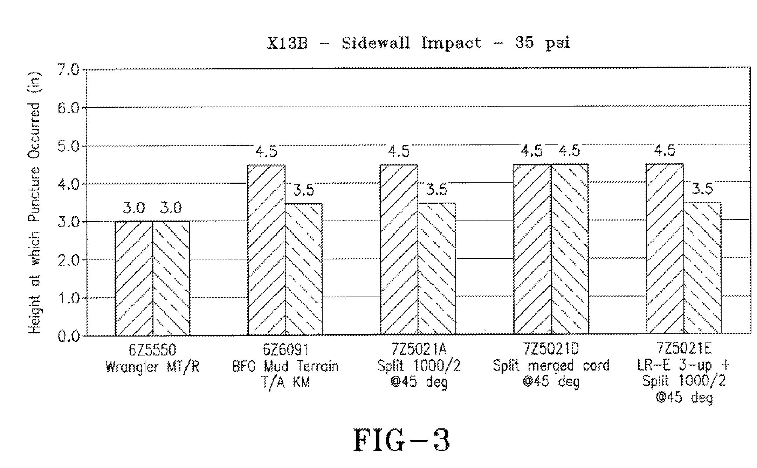

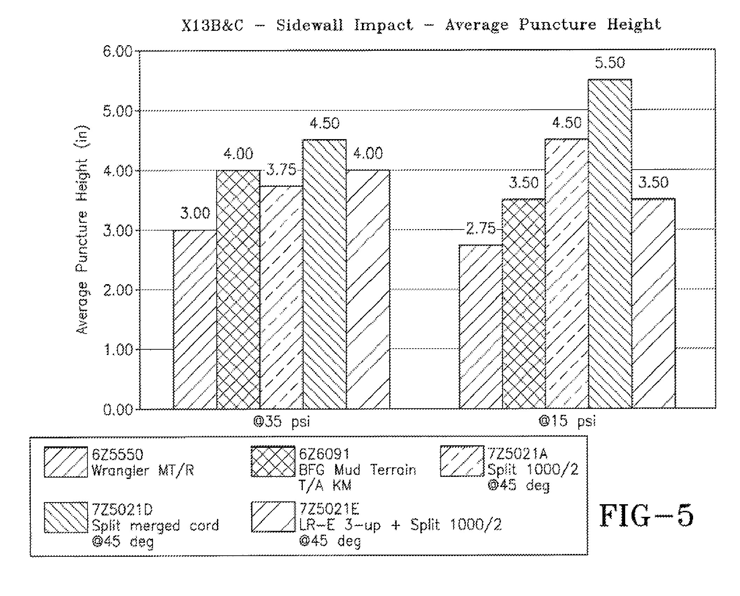

With reference now to FIGURES 2-5, the following test data is provided for the present invention.

The following construction information is provided for the tires tested in the sidewall impact test shown in FIGURE 2:
1. 6Z5550 - Wrangler MT/R (maximum traction/reinforced) - K171 H, (2) 1500/2 + (1) 1000/2 at 85°
2. 6Z6091 - BF Goodrich^{®} Mud Terrain T/A KM
3. Three-ply 7Z5021A - "E" mold - K171H, (2) 2000/2 + split 1000/2 at 45° (one embodiment of the present invention)
4. 7Z5021 D - "E" mold - K171 H, (2) 2000/3 + split Merged Cord 28 EPI at 45° (another embodiment of the present invention)
5. 7Z5021 E - "E" mold - K171H, (2) 1500/2 + (1) 1000/2 @ 85° + split 1000/2 at 45° (another embodiment of the present invention).

The test conditions were as follows: Rim: 8.5 X 17; Inflation: 35 psi and 15 psi; Chisel: ½"; Fixture Weight: 126 lbs; RFP Target (Sidewall Impact Resistance, Tier 4): 130% vs BF Goodrich^{®} Mud Terrain T/A KM.

The test results are shown in FIGURE 2 and show that the present invention, in this example, provides a +57% improvement on sidewall impact.

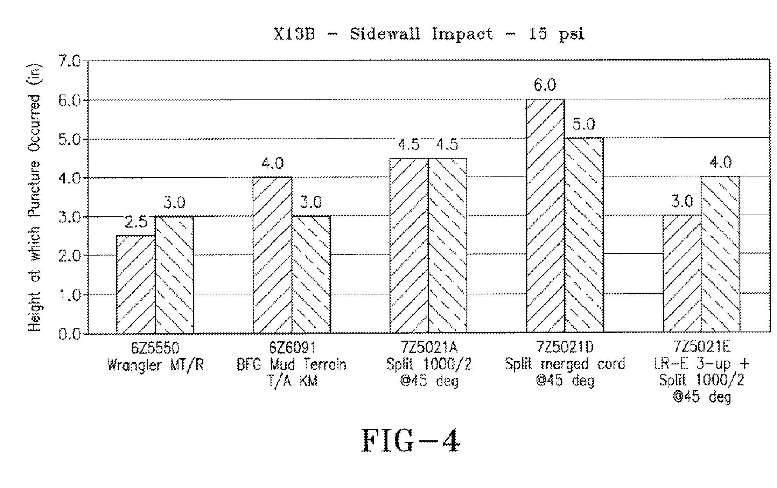

With reference now to FIGURES 2 and 4, the test was run at 15 psi to get a better read of impact resistance at something closer to an off-road inflation. The rank-versus-BFG (B.F. Goodrich^{®}) percentages are based on the two-tire average breaking height. It is shown in this format to try to gauge performance against the target for sidewall impact resistance. Performance of the Wrangler MT/R, 6Z5550, at 35 psi had a puncture height of 3.0". The 15 psi inflation was expected to allow higher puncture heights, due to the increased flexibility of the carcass, but 6Z5550 was equal to or slightly lower at 15 psi. The average 15 psi puncture height was 2.75". Performance of the BF Goodrich Mud Terrain T/A KM, 6Z6091 had an average puncture height of 4.0". The 15 psi inflation was expected to allow higher puncture heights, due to the increased flexibility of the carcass, but 6Z6091 was equal to or slightly lower at 15 psi. The average 15 psi puncture height was 3.5". 7Z5021A's (one embodiment of the present invention) performance at 35 psi had an average puncture height of 3.75", but did not meet the BFG's performance of 4.0", for a ranking of 94%. At 15 psi, 7Z5021A showed improved puncture resistance. Its average puncture height increased to 4.5", an improvement over the MT/R's 3.0", as well as the BFG's 3.5". At 15 psi, 7Z5021A's performance relative to the BFG was 129%.

With continuing reference to FIGURES 2 and 4, the present invention's (7Z5021 D) performance at 35 psi was even better than 7Z5021A's, outperforming both the MT/R and the BFG, with an average puncture height of 4.5". Relative to the BFG, its performance ranking was 113%. At 15 psi, the present invention showed an even larger improvement in puncture resistance. Its average puncture height increased to 5.5", a significant improvement over the MT/R's 3.0", as well as the BFG's 3.5". At 15 psi, its performance relative to the BFG was 157%. 7Z5021 E followed the same unusual tread as the MT/R and BFG, in that its performance decreased slightly at 15 psi versus 35 psi. 7Z5021 E significantly outperformed the MT/R at both inflations, but was identical to the BFG, ranking a 100% at both inflations. 7Z5021 E outperformed 7Z5021A at 35 psi, but significantly underperformed at 15 psi. This data indicates that both split 1000/2 @ 45° and split Merged Cord 28 EPI @ 45° should offer improved sidewall toughness over the Wrangler MT/R.

With continuing reference to FIGURES 1-7, the present invention can be arranged in many forms. By way of example, two of the components of the present invention can be Kevlar^{®}, an aramid available from DuPont and nylon, a polyamide.

Other embodiments are:
Kevlar with a nylon core as a core insertion as a carcass single ply,
Kevlar and nylon as a merge cord single ply, Kevlar and PET (Polyethylene Terephthalate) as a merge cord single ply;
Kevlar with a nylon core as a core insertion single ply with a Kevlar floater;
Kevlar and nylon as a merge cord single ply with a Kevlar floater;
Kevlar and PET (Polyethylene Terephthalate) as a merge cord single ply with a Kevlar floater;
and Kevlar and polyethylene merge in carcass.

It is to be understood, however, that any combination of aramid fibers, polyamide fibers, liquid crystalline aromatic polyesters, carbon fibers, fiberglass, and metallic fibers can be used, as long as chosen using sound engineering judgment. It is also to be understood that the angles for the various combinations are between 0° and 180°.

## Claims

1. A tire comprising at least one cord, the cord comprising at least two different fibers of the group comprising aramid fibers, polyamide fibers, liquid crystalline aromatic polyesters, carbon fibers, fiberglass, and metallic fibers.

2. The tire of claim comprising a ply (20) extending along a ply angle, wherein ply (20) comprises a fabric comprising an aramid/polyamide 6,6 merged cord (16) and wherein the fabric is at an angle of between 0° and 180° to the ply angle.

3. The tire of claim 2 wherein the fabric is unidirectional.

4. The tire of claim 1 wherein the cord is chosen from the group comprising a merged cord (16), a hybrid cord, and a core insertion cord (36).

5. The tire of claim 1 or 4 wherein the cord is chosen from the group comprising an unidirectional cord, a bidirectional cord, a multidirectional cord, a film cord, a weaved cord and a knitted cord.

6. The tire of claim 1 wherein the cord consists of or comprises aramid fibers and polyamide fibers.

7. The tire of at least one of the previous claims wherein the cord is at an angle with respect to a ply angle of from 135° to 45°.

8. The tire of claim 7 wherein the cord is at an angle of from 55° to 45°.

9. The tire of at least one of the previous claims wherein the cord has a cord density of from 5 to 40 epi, alternatively of from 10 to 25 epi.

10. The tire of at least one of the previous claims wherein the cord has a twist multiplier of from 0 to 10, alternatively of from 2 to 8.

11. The tire of at least one of the previous claims wherein the cord has a cord mass of from 440 dtex to 10000 dtex, alternatively of from 1000 dtex to 6000 dtex.

12. A unidirectional fabric for use in an associated vehicle tire, the fabric comprising an aramid/polyamide 6,6 merged cord (16).

13. A unidirectional fabric for use in an associated vehicle tire, the fabric comprising an aramid/polyamide 6,6 core insertion cord (36).

14. The fabric of claim 12 wherein the merged cord (16) has a cord density of from 5 to 40 epi, alternatively of from 10 to 25 epi, a twist multiplier of from 0 to 10, alternatively of from 2 to 8, and a cord mass of from 440 dtex to 10000 dtex, alternatively of from 1000 dtex to 6000 dtex.

15. The fabric of claim 13 wherein the core insertion cord (36) has a cord density of from 5 to 40 epi, alternatively of from 10 to 25 epi, a twist multiplier of from 0 to 10, alternatively of from 2 to 8, and a cord mass of from 440 dtex to 10000 dtex, alternatively of from 1000 dtex to 6000 dtex.
